# EUROPEAN PATENT APPLICATION

(11) **EP 4 715 072 A1**
(43) Date of publication of application: **25.03.2026**
(21) Application number: 24806944.5
(22) Date of filing: 16.04.2024
(51) Int. Cl.: C22C 9/06, B22F 1/00, B22F 10/28, B22F 10/34, B22F 10/38, B22F 10/64, C22C 9/10, C22F 1/08, C22F 1/00

(54) **CU ALLOY POWDER FOR ADDITIVE MANUFACTURING USE, AND ADDITIVE-MANUFACTURED ARTICLE USING SAME**

(30) Priority: 16.05.2023 JP 2023080984
(71) Applicant: Sanyo Special Steel Co., Ltd., Himeji-shi, Hyogo 672-8677 (JP)
(72) Inventor: SAWADA, Toshiyuki, Himeji-shi, Hyogo 672-8677 (JP)
(74) Representative: Potter Clarkson
(86) International application number: PCT/JP2024/015165
(87) International publication number: WO 2024/236990

(57) **Abstract**

Provided are a Cu alloy powder for additive manufacturing, which can be shaped at high relative density, and from which an additive-manufactured article having high hardness, high electrical conductivity, and high thermal conductivity can be manufactured; and a shaped article using the Cu alloy powder for additive manufacturing. The Cu alloy powder for additive manufacturing contains, in % by mass, 1.20 to 7.30% of Ni, 0.25 to 1.80% of Si, 0.40% or less of Mg, 0.00 to 2.00% of a total amount of one or more elements selected from Zr, Cr, Nb, Mn, Fe, Zn and Sn, 0.000 to 0.020% of C, 0.000 to 0.020% of P, 0.000 to 0.020% of S, and the balance consisting of Cu and unavoidable impurities, wherein the Ni/Si ratio of the Ni content to the Si content is 3.00 to 6.00, and the total content of Ni and Si is 1.50 to 9.00%.

## Description

### TECHNICAL FIELD

The present disclosure is related to a Cu alloy powder for additive manufacturing and an additive-manufactured article using same.

### BACKGROUND ART

As a Cu alloy has high electrical and thermal conductivities, it is used in various types of coils, heat sinks, electrical contacts, molds, and the like. In order to handle complex shapes, manufacturing of articles by additive manufacturing (also known as 3D printing, three-dimensional modeling, and the like) has recently been attempted and is currently under consideration.

Generally, according to the Wiedemann-Frantz rule (the ratio of thermal conductivity κ and electrical conductivity δ of a metal has a constant value at a constant temperature T irrespective of a metal type), there is a correlation between thermal conductivity and electrical conductivity of a metal. Therefore, only electrical conductivity is used herein to describe any matters related to both physical properties.

Now, if one attempts to shape a Cu powder by additive manufacturing, the Cu powder reflects a laser beam that is often used as a heat source in additive manufacturing. Therefore, even if the Cu powder is to be used for additive manufacturing, it has been difficult to obtain a shaped article with no residual pore and high relative density by increasing the temperature of the Cu powder high enough to melt.

Thus, it has been attempted to obtain a Cu alloy additive-manufactured article having high relative density by adding various types of added elements, including Ni, to reduce a laser reflectivity of the Cu alloy powder (or to increase a laser absorption rate) thereby making it easier to melt (see Patent Literatures 1, 2, and 3).

However, an excessive addition of Ni reduces electrical conductivity of a shaped article and deteriorates the excellent physical properties that Cu originally has.

In addition, it has recently come under consideration to apply additive manufacturing to Cu alloy products used under stress conditions and in an environment involving interactions with other materials. In order to be durable in these usage environments, hardness is also required for a Cu alloy additive-manufactured article. However, an effect of Ni on hardness that is required for the Cu alloy additive-manufactured article has not ever been considered in detail and has not been paid enough attention.

### CITATION LIST

### PATENT LITERATURE

Patent Literature 1: JP2021-17639A
Patent Literature 2: JP2022-188809A
Patent Literature 3: WO2018/199110

### SUMMARY OF INVENTION

Conventionally, regarding a use of a Cu alloy powder for additive manufacturing, there has not been found a Cu alloy shaped article with excellent shapability (an ability to shape at high relative density), a Cu alloy shaped article having both high hardness and high electrical conductivity or a raw material powder that can achieve such. Therefore, the present invention aims to provide a Cu alloy powder for additive manufacturing that can achieve hardness, shapability, relative density, and electrical conductivity all at a high level and a shaped article produced by using thereof.

However, if an added amount of Ni is increased to improve shapability in response to the laser reflectivity, electrical conductivity is noticeably decreased, and it is difficult and not simple to achieve shapability and electrical conductivity at a high level.

In addition, Ni is a readily soluble element to Cu in a molten metal. Therefore, even if one focuses on a solid solution strengthening as a main influence of Ni on hardness and proceeds with studies, it is anticipated that it would be difficult to obtain a noticeable increase in hardness by solid solution strengthening due to the fact that there is no large difference in atomic radii of Cu and Ni. Therefore, it is difficult to find a solution from a general idea of solid solution strengthening.

Thus, the problems to be solved by the present invention are to provide: a Cu alloy powder for additive manufacturing having excellent shapability that can be shaped at high relative density, and from which an additive-manufactured article having high hardness, high electrical conductivity, and high thermal conductivity can be manufactured; and a shaped article using the Cu alloy powder for additive manufacturing.

As mentioned above, if the amount of Ni is increased by focusing simply on Ni, electrical conductivity is decreased, and it is difficult to achieve an increase in hardness by solid solution strengthening. Therefore, as a result of diligent studies, the present inventors found that as a composition for the Ni-added Cu alloy that can have all of hardness for a shaped article, shapability, and electrical conductivity in a good balance, a predetermined amount of Si is added as a third component in addition to Ni, and the mass ratio of Ni/Si is specified in a predetermined range to achieve high hardness, excellent shapability, and high electrical conductivity.

There have not been any literatures that have studied an effect of such simultaneous addition of Ni and Si to Cu on additive manufacturing and an additive-manufactured article in detail, and this is a new finding revealed for the first time by the present invention. Especially, since additive manufacturing is a manufacturing method that involves rapid solidification, the factors that affect electrical conductivity and hardness, such as a grain size, constituent phase, formation behavior of precipitates of an additive-manufactured article, are thought to differ largely from those in a melting method, and a heat treatment behavior and the like are also thought to be different. In addition, shapability is a requirement that is unique to additive manufacturing. These aspects were studied as a whole to achieve the present invention.

Specifically, the present disclosure provides the following aspects.

### [Aspect 1]

A Cu alloy powder for additive manufacturing comprising, in % by mass:
1.20 to 7.30% of Ni;
0.25 to 1.80% of Si;
0.40% or less of Mg;
0.00 to 2.00% of a total amount of one or more elements selected from Zr, Cr, Nb, Mn, Fe, Zn, and Sn;
0.000 to 0.020% of C;
0.000 to 0.020% of P; and
0.000 to 0.020% of S;
the balance consisting of Cu and unavoidable impurities;
wherein a Ni/Si ratio of the Ni content to the Si content is 3.00 to 6.00, and a total content of Ni and Si is 1.50 to 9.00%.

### [Aspect 2]

A Cu alloy powder for additive manufacturing comprising, in % by mass:
1.20 to 7.30% of Ni;
0.25 to 1.80% of Si;
0.40% or less of Mg;
0.00 to 2.00% of a total amount of one or more elements selected from Zr, Cr, Nb, Mn, Fe, Zn, and Sn;
0.000 to 0.020% of C;
0.000 to 0.020% of P;
0.000 to 0.020% of S; and
more than 0% and 5.00% or less of Ag;
the balance consisting of Cu and unavoidable impurities;
wherein a Ni/Si ratio of the Ni content to the Si content is 3.00 to 6.00, and a total content of Ni and Si is 1.50 to 9.00%.

### [Aspect 3]

A shaped article that is additively manufactured using the Cu alloy powder for additive manufacturing according to aspect 1.

### [Aspect 4]

A shaped article that is additively manufactured using the Cu alloy powder for additive manufacturing according to aspect 2.

Using the Cu alloy powder for additive manufacturing of the present invention in additive manufacturing can shape an article at high relative density, and a shaped article having high hardness, high electrical conductivity, and high thermal conductivity can be obtained.

In the present invention, the Ni/Si ratio that is the mass ratio of the Ni content to the Si content is specified to a predetermined range. By doing so, when the shaped article is subjected to an aging treatment, an intermetallic compound having the predetermined ratio of Ni and Si precipitates. Thus, precipitation strengthening that is generally considered more effective in strengthening than solid solution strengthening can be used. In addition, Si facilitates a precipitation of Ni (removal from a Cu matrix), which is a readily soluble element, as an intermetallic compound, and so high electrical conductivity can also be obtained.

Also, as limiting the Ni/Si ratio to the predetermined range can prevent becoming excessively Ni- and Si-rich, Ni and Si do not remain on the Cu matrix in excessive concentrations after the precipitation of the abovementioned intermetallic compound, and high electrical conductivity is obtained.

In addition, high electrical conductivity can be obtained by keeping the total content of Mg, Zr, Cr, Nb, Mn, Fe, Zn, and Sn low and reducing the impurities of C, P, and S.

Furthermore, adding Ag as in Aspects 2 and 4 can further improve a balance of hardness and electrical conductivity while maintaining an excellent shapability. It is thought that Ag in the alloy of the present Aspects offers the abovementioned advantages by further facilitating a precipitation of the abovementioned intermetallic compound and a removal of an element, such as Zr and Cr (if any exists), from a Cu matrix.

### BRIEF DESCRIPTION OF DRAWING

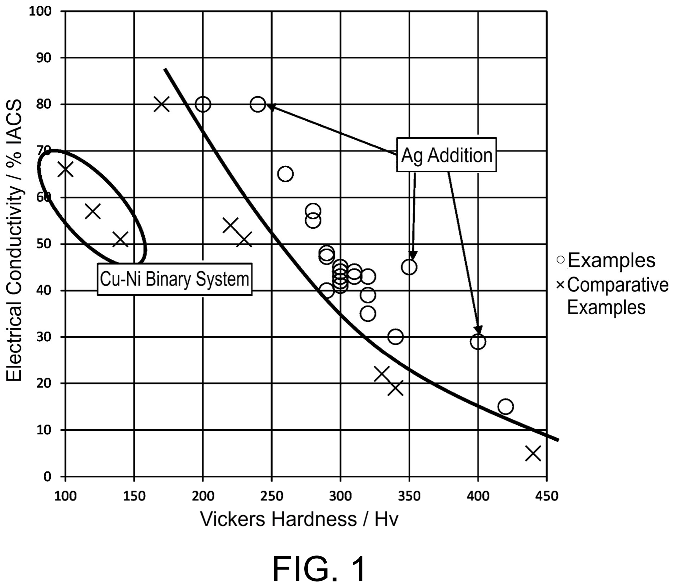

Figure 1 is a graph illustrating the measurement results of Examples and Comparative Examples, in which a vertical axis illustrates electrical conductivity (% IACS) and a horizontal axis Vickers hardness (HV). In this figure, the measurement results of Examples 1 to 29 are illustrated with the mark "o" and the measurement results of Comparative Examples 1 to 9 with the mark "×".

### DESCRIPTION OF EMBODIMENTS

Prior to the description of the embodiments of the present invention, reasons for specifying each component to be added to the Cu alloy powder of the present invention and for specifying the Ni/Si ratio and Ni + Si are described. It should be noted that % in the component is % by mass. It should be noted that the balance component consists of Cu and unavoidable impurities.

### 1.20 to 7.30% of Ni

Ni is an essential element for precipitating an intermetallic compound with Si to increase hardness, and it is also effective in improving shapability. However, if Ni is added excessively, electrical conductivity is decreased significantly. The Ni content of less than 1.20% has no effect, but when more than 7.30% is added, electrical conductivity is significantly decreased. Therefore, the Ni content is 1.20 to 7.30%, preferably 2.25 to 6.00%, and more preferably 3.30 to 4.70%.

### 0.25 to 1.80% of Si

Si is an essential element for precipitating an intermetallic compound with Ni to increase hardness, and it is also effective in improving shapability. However, if Si is added excessively, electrical conductivity is decreased significantly. The Si content of less than 0.25% has no effect, but when more than 1.80% is added, electrical conductivity is significantly decreased. Therefore, the Si content is 0.25 to 1.80%, preferably 0.55 to 1.45%, and more preferably 0.80 to 1.15%.

### 0.40% or less of Mg

Mg is an easily oxidized element and is a component that causes a residual pore by reacting with oxygen during shaping and forming a gas; it is also an element that can decrease electrical conductivity. If the Mg content is 0.40% or less, the effect is insignificant. Meanwhile, if Mg is contained more than 0.40%, these adverse effects become significant. Therefore, the Mg content is 0 to 0.40%, preferably 0.10% or less, and more preferably 0.02% or less. Thus, Mg is not an essential element, and therefore, the Mg content may be 0%.

### 0.00 to 2.00% of Zr, Cr, Nb, Mn, Fe, Zn, and Sn in total

If one or more elements selected from Zr, Cr, Nb, Mn, Fe, Zn, and Sn is contained, the total amount thereof is 2.00% or less in terms of % by mass. These elements are effective in improving shapability and hardness but comparing with the situation in which Ni and Si that are the essential elements of the present invention are added in the predetermined ratio, the balance of high hardness and high electrical conductivity is decreased as a result of containing Zr, Cr, Nb, Mn, Fe, Zn, and Sn. This is because these elements all dissolve in a Cu matrix to form a solid solution thereby decreasing the balance of high hardness and high electrical conductivity. From this perspective, when the Cu alloy powder contains Zr, Cr, Nb, Mn, Fe, Zn, and Sn, the total amount of these components can be taken into account. In addition, if the total amount of these components contained is more than 2.00%, an adverse effect becomes significant. Meanwhile, if the total content of Zr, Cr, Nb, Mn, Fe, Zn, and Sn is 2.00% or less, the effect on the balance of high hardness and high electrical conductivity is insignificant. Therefore, the total amount of Zr, Cr, Nb, Mn, Fe, Zn, and Sn is 0.00 to 2.00%, more preferably 0.90% or less, and even more preferably 0.05% or less.

### 0.000 to 0.020% of C, P, and S each

C, P, and S are the components that can all cause a decrease in electrical conductivity, and so it is desirable to strictly set the upper limit. If the Cu alloy powder contains 0.020% or less of any of these components, the effect is insignificant; but if any of these components is contained more than 0.020%, an adverse effect becomes significant. Therefore, the C, P, and S contents are 0.000 to 0.020% each, preferably 0.014% or less, and more preferably 0.009% or less.

### 3.00 to 6.00 of Ni/Si

The Ni/Si ratio is one of the most important parameters in the present invention. This is a parameter to have both high hardness and high electrical conductivity in balance while maintaining high shapability. If the mass ratio of Ni and Si is less than 3.00 or more than 6.00, in both cases, a balance of high hardness and high electrical conductivity of an additive-manufactured article is decreased. Therefore, the Ni/Si ratio is 3.00 to 6.00, preferably 3.55 to 4.95, and more preferably 3.85 to 4.30.

### 1.50 to 9.00% of Ni + Si

As has been mentioned above, Ni and Si are the essential elements that are important in the present invention, and if the total amount thereof is less than 1.50%, high hardness cannot be obtained; if the total amount thereof is more than 9.00%, electrical conductivity is decreased. Therefore, the total amount of Ni and Si (in other words, Ni + Si) is 1.50 to 9.00%, preferably 2.70 to 7.05%, and more preferably 3.90 to 5.10%.

### 5.00% or less of Ag

If Ag is added to a Cu alloy powder containing Ni and Si within the range of the abovementioned Ni/Si ratio, and the Ni and Si contents, a balance of high hardness and high electrical conductivity is further improved. In addition, if the Cu alloy powder contains one or more elements selected from Zr and Cr, the effect is more pronounced. However, if added in excess, the effect is no longer recognized. If Ag is added more than 5.00%, the effect of improving the balance of high hardness and high electrical conductivity is no longer recognized, and only the material cost is increased by Ag being expensive. Therefore, if Ag is added as described in Aspect 2, the Ag content is 5% or less, preferably 0.01 to 2.90%, and more preferably 0.03 to 0.90%.

### [O and N]

As the powder in the present invention is an alloy, it unavoidably contains gaseous components of oxygen and nitrogen. Also, generally, there is a difference in the contents of these gaseous components on the surface and the inside of the powder, and the content of the gaseous component per powder weight depends on the total surface area (in other others, the grain size). Therefore, from a perspective of a residual pore and non-metallic inclusions by oxygen and nitrogen in the additive-manufactured article, the amount of oxygen (the oxygen content) contained in the powder is preferably 1,000 ppm or less, and more preferably 500 ppm or less. In addition, the amount of nitrogen (the nitrogen content) is preferably 300 ppm or less, and more preferably 150 ppm or less.

### [Average grain size of powder]

The powder in the present invention can suitably be used in additive manufacturing. There are various methods in additive manufacturing, but if a powder is used as a raw material, the powder having an average grain size (volume average) of about 10 to 200 µm is generally used. A preferable average grain size is 15 to 40 µm for laser powder bed fusion; 50 to 100 µm for electron beam powder bed fusion; and 55 to 105 µm for directed energy deposition. A more preferable average grain size is 20 to 35 µm for laser powder bed fusion; 65 to 85 µm for electron beam powder bed fusion; and 70 to 90 µm for directed energy deposition.

### [Flow rate, tap density, and average circularity of powder]

The powder in the present invention can suitably be used for additive manufacturing. From a perspective of uniformity of a powder bed by a squeegee (a plate for spreading the powder in a constant thickness) in powder bed fusion and a stable supply of the powder through a feeder in directed energy deposition, a flow rate of the powder is preferably 30 s/50 g, and more preferably 20 s/50 g. In addition, from a similar perspective, a tap density of the powder is preferably 50 to 80% against the true density, and more preferably 60 to 78%. Furthermore, from a similar perspective, an average circularity of the powder is preferably 0.70 or more, and more preferably 0.75 or more.

Now, a flow rate can be measured by a hall flow method and the like. A tap density can be measured by a method of such as tapping a powder in a container and measuring a weight and a volume. A true density can be measured by a gas displacement method and the like. An average circularity can be measured by Morphologi 4 (manufactured by Malvern Panalytical Ltd.) and the like.

### [Heat treatment temperature]

The additive-manufactured article in the present invention is subjected to a heat treatment to precipitate an intermetallic compound thereby increasing hardness and electrical conductivity. The lower limit of the heat treatment temperature can be 400°C, preferably 600°C, more preferably 650°C, and even more preferably 700°C. Moreover, the upper limit of the heat treatment temperature is preferably 900°C, and more preferably 850°C.

### EXAMPLES

The present invention is further described in detail with reference to the following Examples. However, the present invention is not limited to the following Examples. The Cu alloy powders with the component compositions and the Ni/Si ratios of Examples 1 to 29 and Comparative Examples 1 to 9 illustrated in Tables 1A and 1B were produced, and then these Cu alloy powders were used to obtain shaped articles by additive manufacturing. It should be noted that the alloy compositions illustrated in Tables 1A and 1B are the component compositions of a Cu alloy powder, and therefore, the balance of the alloy composition illustrated in the tables is Cu and unavoidable impurities.

### [Production of raw material powder]

Each powder having a composition illustrated in Tables 1A and 1B was produced by gas atomization by the following steps. A raw material for the powder was filled in an alumina crucible, and the raw material for melting was melted by high frequency heating in a vacuum or argon atmosphere. The alloy melt obtained as such was released from the bottom of the crucible through a nozzle having a diameter of 5 mm and was immediately sprayed with a high-pressure argon gas. This spraying disintegrated the alloy melt into fine droplets, and while these droplets fell through a tower of the atomization apparatus, they were cooled and solidified to obtain an alloy powder. The alloy powder was passed through a sieve with 63 µm openings, and the powder that passed through the sieve was used as a raw material powder for a subsequent additive manufacturing.

It should be noted that all powders were within the range of: 1,000 ppm or less of the amount of oxygen; 300 ppm or less of the amount of nitrogen; 15 to 40 µm of the average grain size (volume average); 30 s/50 g or less of the flow rate; 50 to 80% of the percentage of the tap density against the true density; and 0.70 or more of the average circularity.

### [Table 1A]

**Table 1A**

| | No. | Ni | Si | Mg | Zr | Cr | Nb | Mn | Fe | Zn | Sn | C | P | S | Aq | Ni/Si | Ni+Si |
|---|---|---|---|---|---|---|---|---|---|---|---|---|---|---|---|---|---|
| | 1 | 1.53 | 0.37 | <0.01 | <0.01 | <0.01 | <0.01 | 0.01 | 0.04 | <0.01 | <0.01 | 0.001 | 0.003 | 0.003 | <0.01 | 4.14 | 1.90 |
| | 2 | 2.98 | 0.70 | <0.01 | <0.01 | <0.01 | <0.01 | 0.01 | 0.03 | <0.01 | <0.01 | 0.004 | 0.003 | 0.002 | <0.01 | 4.26 | 3.68 |
| | 3 | 3.99 | 0.95 | <0.01 | <0.01 | <0.01 | <0.01 | 0.03 | 0.03 | <0.01 | <0.01 | 0.002 | 0.004 | 0.003 | <0.01 | 4.20 | 4.94 |
| | 4 | 5.05 | 1.21 | <0.01 | <0.01 | <0.01 | <0.01 | <0.01 | 0.01 | <0.01 | <0.01 | 0.004 | 0.002 | 0.004 | <0.01 | 4.17 | 6.26 |
| | 5 | 6.98 | 1.69 | <0.01 | <0.01 | <0.01 | <0.01 | <0.01 | 0.01 | <0.01 | <0.01 | 0.002 | 0.001 | 0.003 | <0.01 | 4.13 | 8.67 |
| | 6 | 3.95 | 0.72 | <0.01 | <0.01 | <0.01 | <0.01 | 0.03 | 0.01 | <0.01 | <0.01 | 0.004 | 0.004 | 0.002 | <0.01 | 5.49 | 4.67 |
| | 7 | 3.96 | 1.23 | <0.01 | <0.01 | <0.01 | <0.01 | 0.10 | 0.03 | <0.01 | <0.01 | 0.004 | 0.005 | 0.004 | <0.01 | 3.22 | 5.19 |
| | 8 | 2.98 | 0.97 | <0.01 | <0.01 | <0.01 | <0.01 | 0.01 | 0.10 | <0.01 | <0.01 | 0.002 | 0.001 | 0.003 | <0.01 | 3.07 | 3.95 |
| | 9 | 5.02 | 0.98 | <0.01 | <0.01 | <0.01 | <0.01 | 0.02 | 0.04 | <0.01 | <0.01 | 0.001 | 0.002 | 0.003 | <0.01 | 5.12 | 6.00 |
| | 10 | 3.98 | 0.97 | 0.06 | <0.01 | <0.01 | <0.01 | 0.01 | 0.01 | <0.01 | <0.01 | 0.004 | 0.001 | 0.001 | <0.01 | 4.10 | 4.95 |
| | 11 | 3.95 | 0.94 | <0.01 | 0.80 | <0.01 | <0.01 | 0.02 | 0.02 | <0.01 | <0.01 | 0.002 | 0.001 | 0.001 | <0.01 | 4.20 | 4.89 |
| | 12 | 3.98 | 0.97 | <0.01 | <0.01 | 0.45 | <0.01 | 0.02 | 0.03 | <0.01 | <0.01 | 0.005 | 0.004 | 0.001 | <0.01 | 4.10 | 4.95 |
| | 13 | 4.05 | 0.94 | <0.01 | <0.01 | <0.01 | 0.07 | 0.03 | 0.03 | <0.01 | <0.01 | 0.003 | 0.002 | 0.003 | <0.01 | 4.31 | 4.99 |
| | 14 | 4.05 | 0.98 | <0.01 | <0.01 | <0.01 | <0.01 | 0.72 | 0.04 | <0.01 | <0.01 | 0.003 | 0.003 | 0.001 | <0.01 | 4.13 | 5.03 |
| Example | 15 | 3.98 | 0.96 | <0.01 | <0.01 | <0.01 | <0.01 | 0.03 | 0.85 | <0.01 | <0.01 | 0.001 | 0.002 | 0.005 | <0.01 | 4.15 | 4.94 |
| | 16 | 3.98 | 0.97 | <0.01 | <0.01 | <0.01 | <0.01 | <0.01 | 0.03 | 0.66 | <0.01 | 0.002 | 0.003 | 0.001 | <0.01 | 4.10 | 4.95 |
| | 17 | 3.98 | 0.99 | <0.01 | <0.01 | <0.01 | <0.01 | 0.03 | 0.01 | <0.01 | 0.72 | 0.003 | 0.001 | 0.003 | <0.01 | 4.02 | 4.97 |
| | 18 | 4.02 | 0.95 | <0.01 | <0.01 | <0.01 | <0.01 | <0.01 | 0.02 | <0.01 | <0.01 | 0.014 | 0.003 | 0.003 | <0.01 | 4.23 | 4.97 |
| | 19 | 3.98 | 0.95 | <0.01 | <0.01 | <0.01 | <0.01 | 0.01 | 0.03 | <0.01 | <0.01 | 0.003 | 0.012 | 0.002 | <0.01 | 4.19 | 4.93 |
| | 20 | 4.02 | 0.96 | <0.01 | <0.01 | <0.01 | <0.01 | 0.02 | 0.03 | <0.01 | <0.01 | 0.003 | 0.001 | 0.012 | <0.01 | 4.19 | 4.98 |
| | 21 | 1.50 | 0.36 | <0.01 | <0.01 | <0.01 | <0.01 | 0.03 | 0.04 | <0.01 | <0.01 | 0.004 | 0.004 | 0.003 | 0.03 | 4.17 | 1.86 |
| | 22 | 4.00 | 0.95 | <0.01 | 0.10 | <0.01 | <0.01 | 0.02 | 0.02 | <0.01 | <0.01 | 0.002 | 0.003 | 0.002 | 0.21 | 4.21 | 4.95 |
| | 23 | 5.02 | 1.21 | <0.01 | <0.01 | 0.24 | <0.01 | 0.01 | 0.04 | <0.01 | <0.01 | 0.003 | 0.002 | 0.003 | 3.40 | 4.15 | 6.23 |
| | 24 | 4.00 | 0.97 | <0.01 | <0.01 | <0.01 | <0.01 | 0.02 | 0.03 | <0.01 | <0.01 | 0.002 | 0.003 | 0.002 | <0.01 | 4.12 | 4.97 |
| | 25 | 4.00 | 0.96 | <0.01 | <0.01 | <0.01 | <0.01 | <0.01 | 0.04 | <0.01 | <0.01 | 0.002 | 0.003 | 0.001 | <0.01 | 4.17 | 4.96 |
| | 26 | 4.02 | 0.95 | <0.01 | <0.01 | <0.01 | <0.01 | 0.02 | 0.03 | <0.01 | <0.01 | 0.001 | 0.003 | 0.004 | <0.01 | 4.23 | 4.97 |
| | 27 | 3.99 | 0.96 | <0.01 | <0.01 | <0.01 | <0.01 | 0.01 | 0.02 | <0.01 | <0.01 | 0.001 | 0.002 | 0.001 | <0.01 | 4.16 | 4.95 |
| | 28 | 3.95 | 1.02 | <0.01 | <0.01 | <0.01 | <0.01 | 0.01 | 0.02 | <0.01 | <0.01 | 0.003 | 0.002 | 0.004 | <0.01 | 3.87 | 4.97 |
| | 29 | 3.96 | 1.11 | <0.01 | <0.01 | <0.01 | <0.01 | 0.02 | 0.01 | <0.01 | <0.01 | 0.002 | 0.003 | 0.001 | <0.01 | 3.57 | 5.07 |

| | | | | | | | | | | | | | | | | | |
|---|---|---|---|---|---|---|---|---|---|---|---|---|---|---|---|---|---|
| * The balance consists of Cu and unavoidable impurities. * Si in Comparative Examples 7 to 9 are impurities. | | | | | | | | | | | | | | | | | |

### [Table 1B]

**Table 1B**

| | No. | Ni | Si | Mq | Zr | Cr | Nb | Mn | Fe | Zn | Sn | C | P | S | Ag | Ni/Si | Ni+Si |
|---|---|---|---|---|---|---|---|---|---|---|---|---|---|---|---|---|---|
| | 1 | 0.99 | 0.24 | <0.01 | <0.01 | <0.01 | <0.01 | <0.01 | 0.04 | <0.01 | <0.01 | 0.004 | 0.004 | 0.004 | <0.01 | 4.13 | 1.23 |
| | 2 | 8.01 | 1.88 | <0.01 | <0.01 | <0.01 | <0.01 | 0.03 | 0.04 | <0.01 | <0.01 | 0.002 | 0.003 | 0.004 | <0.01 | 4.26 | 9.89 |
| | 3 | 3.97 | 0.34 | <0.01 | <0.01 | <0.01 | <0.01 | <0.01 | 0.01 | <0.01 | <0.01 | 0.004 | 0.002 | 0.004 | <0.01 | 11.68 | 4.31 |
| | 4 | 3.97 | 1.70 | <0.01 | <0.01 | <0.01 | <0.01 | <0.01 | 0.04 | <0.01 | <0.01 | 0.003 | 0.002 | 0.003 | <0.01 | 2.34 | 5.67 |
| Comparative Example | 5 | 1.50 | 0.94 | <0.01 | <0.01 | <0.01 | <0.01 | 0.01 | 0.02 | <0.01 | <0.01 | 0.002 | 0.001 | 0.001 | <0.01 | 1.60 | 2.44 |
| | 6 | 7.04 | 0.97 | <0.01 | <0.01 | <0.01 | <0.01 | 0.01 | 0.04 | <0.01 | <0.01 | 0.001 | 0.001 | 0.002 | <0.01 | 7.26 | 8.01 |
| | 7 | 1.52 | 0.01 | <0.01 | <0.01 | <0.01 | <0.01 | 0.01 | 0.04 | <0.01 | <0.01 | 0.001 | 0.003 | 0.003 | <0.01 | 152.00 | 1.53 |
| | 8 | 4.00 | 0.01 | <0.01 | <0.01 | <0.01 | <0.01 | 0.03 | 0.03 | <0.01 | <0.01 | 0.002 | 0.004 | 0.003 | <0.01 | 400.00 | 4.01 |
| | 9 | 7.01 | 0.02 | <0.01 | <0.01 | <0.01 | <0.01 | <0.01 | 0.01 | <0.01 | <0.01 | 0.002 | 0.001 | 0.003 | <0.01 | 350.50 | 7.03 |

| | | | | | | | | | | | | | | | | | |
|---|---|---|---|---|---|---|---|---|---|---|---|---|---|---|---|---|---|
| * The balance consists of Cu and unavoidable impurities. * Si in Comparative Examples 7 to 9 are impurities. | | | | | | | | | | | | | | | | | |

### [Additive manufacturing and heat treatment]

These Cu alloy powders were used to create shaped articles by additive manufacturing. In particular, additive manufacturing was implemented using an apparatus for laser-heated powder bed fusion (trade name: EOS-M290) with an energy density of 200 J/mm³.

Using a plate made of a pure Cu as a base material for shaping, a shaped article with a dimension of 12 mm × 12 mm × 12 mm for measuring relative density and hardness and another shaped article with a dimension of 10 mm × 10 mm × 70 mm for measuring electrical conductivity were produced. These shaped articles were separated from the plates by wire cutting and were subjected to a heat treatment under the conditions of temperature and time illustrated in Table 2 to evaluate each of relative density, hardness, and electrical conductivity. The results are illustrated in Table 2.

It should be noted that the heat treatment in Examples was performed in an argon atmosphere, and the shaped article was held at the predetermined temperature for a period of the predetermined time and then was slowly cooled in the furnace. Also, the heat treatment temperature was varied for some of the test specimens to evaluate the effect of the heat treatment conditions on the balance of hardness and electrical conductivity of the shaped article with the present alloy.

### [Table 2]

**Table 2**

| | No. | Heat treatment temperature (°C) | Heat treatment time (h) | Relative density (%) | Hardness (HV) | Electrical conductivity (% IACS) |
|---|---|---|---|---|---|---|
| Example | 1 | 800 | 5 | 99.2 | 200 | 80 |
| | 2 | 800 | 5 | 99.8 | 260 | 65 |
| | 3 | 800 | 5 | 99.9 | 300 | 45 |
| | 4 | 800 | 5 | 99.9 | 340 | 30 |
| | 5 | 800 | 5 | 99.9 | 420 | 15 |
| | 6 | 800 | 5 | 99.9 | 280 | 57 |
| | 7 | 800 | 5 | 99.8 | 320 | 39 |
| | 8 | 800 | 5 | 99.8 | 280 | 55 |
| | 9 | 800 | 5 | 99.9 | 320 | 35 |
| | 10 | 800 | 5 | 99.8 | 300 | 45 |
| | 11 | 800 | 5 | 99.8 | 320 | 43 |
| | 12 | 800 | 5 | 99.9 | 310 | 43 |
| | 13 | 800 | 5 | 99.9 | 310 | 44 |
| | 14 | 800 | 5 | 99.8 | 300 | 42 |
| | 15 | 800 | 5 | 99.9 | 300 | 41 |
| | 16 | 800 | 5 | 99.6 | 300 | 43 |
| | 17 | 800 | 5 | 99.9 | 300 | 44 |
| | 18 | 800 | 5 | 99.8 | 300 | 44 |
| | 19 | 800 | 5 | 99.9 | 300 | 44 |
| | 20 | 800 | 5 | 99.8 | 300 | 43 |
| | 21 | 800 | 5 | 99.9 | 240 | 80 |
| | 22 | 800 | 5 | 99.9 | 350 | 45 |
| | 23 | 800 | 5 | 99.9 | 400 | 29 |
| | 24 | 500 | 10 | 99.9 | 290 | 40 |
| | 25 | 650 | 8 | 99.8 | 300 | 42 |
| | 26 | 700 | 6 | 99.8 | 300 | 44 |
| | 27 | 900 | 2 | 99.9 | 290 | 48 |
| | 28 | 800 | 5 | 99.8 | 290 | 47 |
| | 29 | 800 | 5 | 99.8 | 300 | 43 |
| Comparative Example | 1 | 800 | 5 | 95.5 | 170 | 80 |
| | 2 | 800 | 5 | 99.9 | 440 | 5 |
| | 3 | 800 | 5 | 99.8 | 230 | 51 |
| | 4 | 800 | 5 | 99.9 | 330 | 22 |
| | 5 | 800 | 5 | 99.3 | 220 | 54 |
| | 6 | 800 | 5 | 99.9 | 340 | 19 |
| | 7 | 800 | 5 | 97.0 | 100 | 66 |
| | 8 | 800 | 5 | 99.8 | 120 | 57 |
| | 9 | 800 | 5 | 99.8 | 140 | 51 |

### [Evaluation of relative density of shaped article]

A density of the shaped article was measured by the Archimedes' method. The Archimedes' method is a method in which a weight of a test specimen is measured in the air and water; the volume of the shaped article is obtained from the difference; and the **weight** in the air is divided by this volume to calculate a density. In addition, a density of the raw material powder used was measured by a gas displacement method. This method is a method in which a powder is put into a container having a predetermined volume; a certain amount of gas is introduced to the container; a volume of the powder is obtained from the gas pressure; and the weight of the powder is divided by this volume to obtain a density. The density of the powder was taken as a true density of the alloy, and "density of the shaped article/density of the powder × 100 (%)" was evaluated as a relative density of the shaped article.

### [Evaluation of hardness of shaped article]

Hardness of the shaped article was evaluated using a Vickers hardness tester. The measurement was taken with the indentation load of 2.94 N, and an average value of 5 samples (n = 5) was evaluated.

### [Evaluation of electrical conductivity of shaped article]

In order to check the electrical conductivity of the shaped article, specific resistivity was measured by a four-terminal method (JIS C 2525). A reciprocal of the specific resistivity was taken as electrical conductivity, and the value of a pure Cu (5.9 × 10⁷ (S/m)) was taken as 100% IACS to evaluate electrical conductivity (% IACS) of each sample. Using a test specimen that was mechanically processed to a dimension of 3 mm × 2 mm × 60 mm, the measurement was performed under the conditions of an electric current of 4 A and a voltage drop distance of 40 mm at room temperature.

Moreover, the results in Table 2 are illustrated with a graph in Figure 1 with electrical conductivity (% IACS) on a vertical axis and Vickers hardness (HV) on a horizontal axis. In the graph in Figure 1, Examples are illustrated by plotting with the mark "o" and Comparative Examples with the mark "×". It can be seen that a group of Examples has an excellent balance of hardness and electrical conductivity as a whole as compared to a group of Comparative Examples. In addition, Examples 21, 22, and 23 with added Ag have shifted to the upper right of Figure 1 and have even better balance of hardness and electrical conductivity. Moreover, Comparative Examples 7, 8, and 9 with a Cu-Ni binary system have high electrical conductivity but extremely low hardness; and according to Figure 1, it can be seen that these cannot have both high properties of hardness and electrical conductivity, and these properties are unbalanced.

As abovementioned, the powders of Examples 1 to 29 illustrated in Table 1A are the powders that all satisfy the specified component, the Ni/Si ratio, and the amount of Ni + Si, and the shaped article obtained by using these powders in additive manufacturing by powder bed fusion had a relative density of 99.0% or more as illustrated in Table 2; therefore, it was confirmed that these powders have excellent shapability. Also, as illustrated in Figure 1, the shaped articles using the powders of Examples 1 to 29 have both hardness and electrical conductivity well balanced as compared to the ones that were additive manufactured using a conventional powder, and the plot positions of Examples as a whole have shifted to the upper right in Figure 1 as compared to the plot positions of Comparative Examples. In other words, as compared to Comparative Examples, Examples have both properties in better balance than before. Especially, Examples 21, 22, and 23 with added Ag have shifted further to the upper right of Figure 1, and it was confirmed that these have both hardness and electrical conductivity which are even better.

Comparative Example 1 had insufficient amounts of Ni and Si and therefore had an insufficient Ni + Si; thus, the relative density was low, and the shapability was inferior. Comparative Example 2 had excessively Ni and Si and therefore had excessively Ni + Si; thus, electrical conductivity decreased significantly. Comparative Examples 3 and 6 have too high Ni/Si ratios, and Comparative Examples 4 and 5 have too low Ni/Si ratios; thus, all had inferior balance of hardness and electrical conductivity as compared to Examples. Comparative Examples 7, 8, and 9 had a binary system of Cu-Ni, and only a small amount of Si was contained as impurities; therefore, the Ni/Si ratio was considerably abnormal, and hardness was significantly decreased; thus, hardness and electrical conductivity were not balanced well, and Comparative Examples 7, 8, and 9 could not have both high hardness and high electrical conductivity.

## Claims

1. A Cu alloy powder for additive manufacturing comprising, in % by mass:
1.20 to 7.30% of Ni;
0.25 to 1.80% of Si;
0.40% or less of Mg;
0.00 to 2.00% of a total amount of one or more elements selected from Zr, Cr, Nb, Mn, Fe, Zn, and Sn;
0.000 to 0.020% of C;
0.000 to 0.020% of P; and
0.000 to 0.020% of S;
the balance consisting of Cu and unavoidable impurities;
wherein a Ni/Si ratio of the Ni content to the Si content is 3.00 to 6.00, and a total content of Ni and Si is 1.50 to 9.00%.

2. A Cu alloy powder for additive manufacturing comprising, in % by mass:
1.20 to 7.30% of Ni;
0.25 to 1.80% of Si;
0.40% or less of Mg;
0.00 to 2.00% of a total amount of one or more elements selected from Zr, Cr, Nb, Mn, Fe, Zn, and Sn;
0.000 to 0.020% of C;
0.000 to 0.020% of P;
0.000 to 0.020% of S; and
more than 0% and 5.00% or less of Ag;
the balance consisting of Cu and unavoidable impurities;
wherein a Ni/Si ratio of the Ni content to the Si content is 3.00 to 6.00, and a total content of Ni and Si is 1.50 to 9.00%.

3. A shaped article that is additively manufactured using the Cu alloy powder for additive manufacturing according to claim 1.

4. A shaped article that is additively manufactured using the Cu alloy powder for additive manufacturing according to claim 2.
